# EUROPEAN PATENT APPLICATION

(11) **EP 0 797 012 A2**
(43) Date of publication of application: **24.09.1997**
(21) Application number: 97301768.4
(22) Date of filing: 17.03.1997
(51) Int. Cl.: F16B 31/04, B23P 19/06, B25B 29/02

(54) **Hydraulic tensioning apparatus**

(30) Priority: 20.03.1996 GB 9605829; 29.11.1996 GB 9624940
(71) Applicant: HYDRA-TIGHT LIMITED, Walsall WS2 0LB (GB)
(72) Inventor: Simms, Graham A., Compton, Wolverhampton WV6 8BA (GB); Barker, David, Burntwood, Staffordshire WS7 8DR (GB)
(74) Representative: Carpenter, David

(57) **Abstract**

An hydraulic tensioning apparatus comprising an internally screw-threaded collar for screw-threaded engagement with that length of the bolt to be tensioned which protrudes from the associated nut, an externally screw-threaded shank for screw-threaded engagement in an internally screw-threaded bore in the protruding end region of the bolt, and the collar and the shank being movable by one component of an hydraulic piston and cylinder arrangement, the other component of which is fixed in use relative to the surface against which said nut seats.

## Description

This invention relates to an hydraulic apparatus for tensioning screw-threaded bolts or studs.

When considering hydraulic tensioning there is no significant difference between a bolt and a stud, and accordingly, for convenience throughout the rest of the specification we shall refer only to bolts.

It is well known to tension a bolt by means of an hydraulic piston and cylinder arrangement one component of which grips the bolt where it projects from its mating nut and the other component of which bears on the surface against which the nut seats. Hydraulic pressure is applied to the piston and cylinder arrangement to apply a predetermined tension to the bolt stretching the bolt, whereupon the nut is screwed along the bolt to seat again on said surface so preserving the tension in the bolt when the hydraulic pressure is released.

Such known arrangements are very effective, but require a predetermined length of the bolt to protrude from the nut to provide a secure fixing for the tensioning apparatus. Where there is less than the desired minimum length of bolt protruding then there is a risk of the thread of the bolt being stripped when attempting to tension the bolt.

It is known, from EP-0080743 for example, where no length of bolt protrudes from the nut, to apply the tensioning load to the bolt by means of an externally screw-threaded, tapered, adapter which is engaged in a correspondingly screw-threaded tapering bore in the outer end of the bolt. Such an arrangement is disadvantageous in that it concentrates stresses in the bored region of bolt within the nut.

It is an object of the present invention to provide an hydraulic bolt tensioning apparatus which can accommodate arrangements where there is only a relatively small degree of bolt protrusion, and wherein stresses on the bolt are evenly distributed.

In accordance with the present invention there is provided a tensioning apparatus including an internally screw-threaded collar for screw-threaded engagement with that length of the bolt to be tensioned which protrudes from the associated nut, an externally screw-threaded shank for screw-threaded engagement in an internally screw-threaded bore in the protruding end region of the bolt, the collar and the shank being moveable by one component of an hydraulic piston and cylinder arrangement, the other component of which is fixed in use relative to the surface against which said nut seats.

Conveniently said shank is mechanically coupled to said collar, and said collar is movable by said component such that said shank is movable by said component through the intermediary of said collar.

Preferably said shank secures an externally screw-threaded adapter to the end of said bolt and said collar is in screw-threaded engagement both with said adapter and with said bolt.

Alternatively said shank interconnects said bolt and an externally screw-threaded adapter and said collar is in screw-threaded engagement with said adapter, said adapter being movable by said component to move said collar and said shank.

Conveniently said adapter protrudes from said collar for mechanical connection to said component.

Desirably said shank is in screw-threaded engagement in a bore in said adapter.

Alternatively said collar has an integral, radially outwardly projecting peripheral flange cooperating with, or integral with, said component.

Preferably said collar is shaped to control its stretch characteristics exhibited during tensioning, so as to control the distribution of loading between the exterior and interior threads of the bolt.

Conveniently said collar is movable by said component by way of a radially outwardly projecting peripheral flange of said collar against which said component acts in use.

In accordance with a second aspect of the present invention there is provided a method of tensioning a bolt comprising the step of applying a stretching load to the bolt simultaneously through external and internal screw-threads of the bolt.

In the accompanying drawings:-
Figure 1 is a transverse cross-sectional view of an hydraulic bolt tensioning apparatus in accordance with a first example of the present invention;
Figure 2 is a fragmentary cross-sectional view illustrating part of an hydraulic bolt tensioner in accordance with a second example of the invention;
Figure 3 is a view similar to Figure 2 of a minor modification thereof;
Figure 4 is a view similar to Figure 1 of an hydraulic bolt tensioner in accordance with a third example of the present invention;
Figure 5 is a view similar to Figure 1 of an hydraulic bolt tensioner in accordance with a fourth example of the invention;
Figure 6 is an exploded diagrammatic representation of part of the mechanism shown in Figure 5; and
Figures 7, 8 and 9 are cross-sectional views illustrating how the components shown in Figures 5 and 6 are fitted to a bolt to be tensioned.

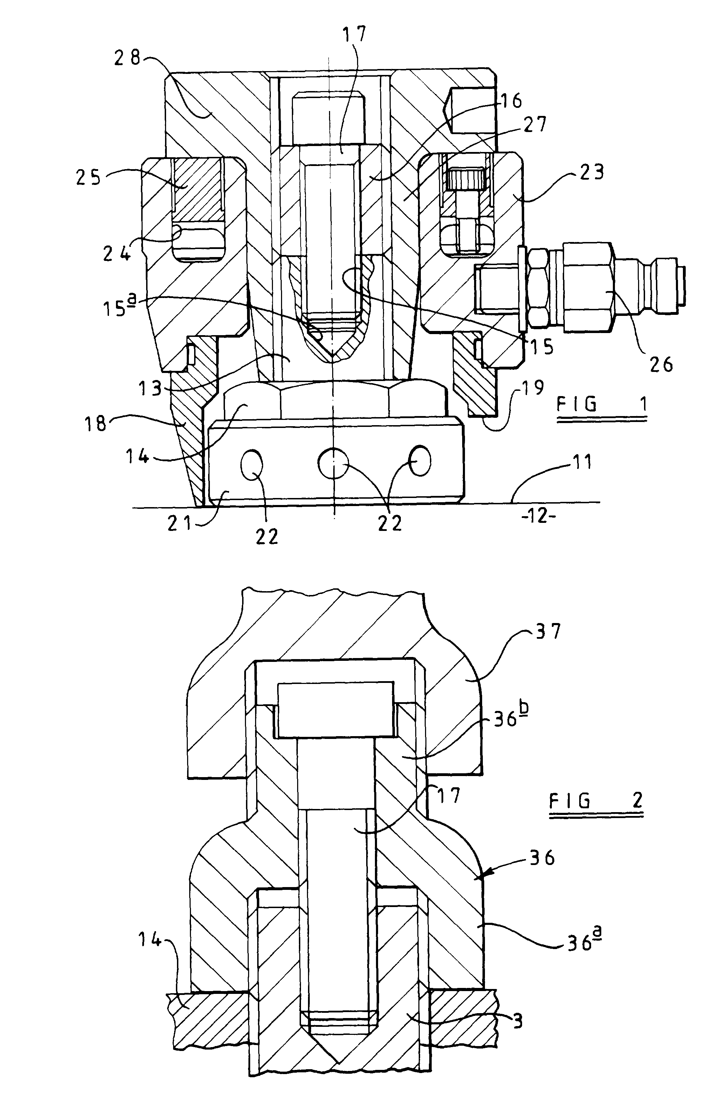

Referring first to Figure 1 of the drawings the reference numeral 11 indicates the surface of a flange 12 which is to be clamped by bolts 13 and nuts 14 to a second, parallel flange (not shown). The head of the bolt (or the other nut in the case where the bolt is replaced by a stud or a tie rod) bears against the outer surface of the second flange and the bolt protrudes from the surface 11, receiving the nut 14 which is screwed down to bear against the surface 11. As is apparent from Figure 1 a short length of the bolt 13 protrudes beyond the nut 14 and is formed with an axially extending bore 15, open at the free end of the bolt, and internally screw-threaded, the closed end 15a of the bore within the bolt 13 being conical.

A cylindrical, steel, thread extender 16 of the same diameter and carrying the same external thread as the bolt 13 is positioned coaxial with the bolt 13 with one of its axial ends abutting the free end of the bolt 13. The extender 16 is formed with an axial through bore of a diameter equal to, or fractionally larger than the maximum diameter of the thread in the bore 15. A short bolt 17 extends through the central bore of the extender 16 into screw-threaded engagement with the bore 15 of the bolt 13, the head of the bolt 17 engaging the end face of the extender 16 remote from the bolt 13 to secure the extender to the bolt 13. It will be understood that before the bolt 17 is tightened to clamp the extender 16 against the bolt 13 the extender 16 can be rotated relative to the bolt 13 to a position such that the thread on the exterior of the extender 16 is continuous with the thread on the exterior of the bolt 13.

Hydraulic bolt tensioning is well known, and relies upon stretching the bolt 13 relative to the surface 11 to tension the bolt whereafter the nut 14 is screwed along the tensioned bolt to engage the surface 11 whereafter the stretching force on the bolt can be released leaving the bolt 13 and nut 14 clamping the first and second flanges with a predetermined loading.

The hydraulic tensioning apparatus includes a generally cylindrical, hollow, reaction member 18 which is positioned coaxially around the bolt 13 and nut 14 and which, at one axial end, abuts the surface 11. The wall of the reaction member 18 adjacent the nut 14 is provided with an 80° window 19 providing access to a drive ring 21 fitted over the nut. The drive ring 21 is in driving engagement with the nut 14 and has a plurality of apertures 22 in its outer surface for engagement by a tommy bar or like tool introduced through the window 19 to rotate the nut 14 relative to the bolt 13 to re-engage the nut 14 with the surface 11 while the bolt 13 is held under tension.

Engaged with the axial end of the member 18 remote from the flange 12 is an annular cylinder ring 23 supported by the member 18 and positioned with its axis coextensive with the axis of the bolt 13. A circumferentially extending channel 24 of rectangular cross-section is formed in the ring 23 and opens at the face of the ring 23 remote from the flange 12. The channel 24 defines a cylinder slidably receiving an annular piston 25 and the channel 24, beneath the piston 25, communicates with an external union 26 by way of passages in the body of the ring 23, whereby hydraulic fluid can be applied to the cylinder to move the piston 25. Although not of importance to the present invention appropriate sliding seals will be provided at the interface of the channel 24 and piston 25.

An internally screw-threaded collar 27 is screwed onto the combined bolt 13 and thread extender 16 so as to engage the whole of the thread of the extender 16 and the whole of the length of the thread of the bolt 13 protruding from the nut 14. Adjacent one end the collar 27 is formed with an integral radially outwardly extending flange 28 which overlies the ring 23 and the undersurface of which abuts the outer surface of the annular piston 25.

It will be recognised that the application of hydraulic fluid under pressure through the union 26 to the channel 24 tends to displace the piston 25 from the channel 24 in a direction parallel to the axis of the bolt 13, and thus applies an axial loading to the collar 27 through the flange 28. This loading, placing the bolt 13 in tension, is applied to the exterior of the bolt through the threaded connection of the collar 27 with the bolt 13, and by virtue of stretching of the collar 27 is applied simultaneously to the interior of the bolt by way of the threaded connection between the collar 27 and the extender 16, the bolt 17, and its threaded interconnection in the bore 15 of the bolt 13.

The application of hydraulic pressure by way of the union 26 thus stretches the bolt 13 relative to the first and second flanges and lifts the nut 14 away from the surface 11. When a predetermined tension has been applied to the bolt (as can be determined by monitoring the hydraulic pressure applied via the union 26) the ring 21 is manipulated by way of the window 19 to screw the nut 14 lightly in contact with the surface 11. Thereafter the hydraulic pressure can be released leaving the bolt 13 tensioned and the first and second flanges clamped together by an accurately predetermined loading. Thereafter of course the components 16, 17, 18, 21, 23, 25 and 27 are removed, and if necessary used to tighten further bolts, possibly on the same pair of flanges.

For any given diameter of bolt 13 and desired tension in that bolt 13 in use, there is a recognised minimum length of bolt which must be engaged with the tensioning mechanism for the appropriate tension to be applied safely without risk of stripping the thread from the bolt. The use of the thread extender 16 and bolt 17, by means of which loading can be applied to the bolt 13 through the internal thread while simultaneously applying loading by way of the external thread, permits tensioning of bolts which protrude by an insufficient amount to permit conventional tightening. As a general guide the axial length of the external thread of the bolt 13 which must be accessible for conventional tensioning should not be less than the diameter of the bolt. The use of the extender 16 and bolt 17 permits tightening in situations where the bolt protrusion length is less than the bolt diameter.

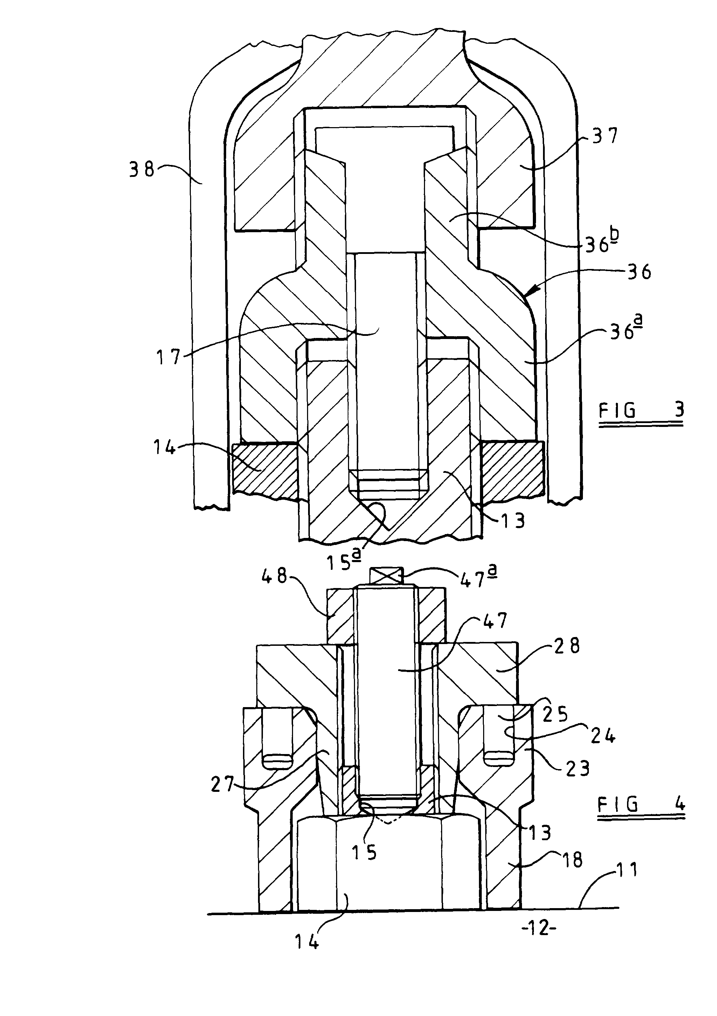

Given knowledge of the dimensions and material of the bolt 13 it is possible to calculate the load which must be applied to the bolt to achieve a predetermined stretch and thus a predetermined tension in the bolt. Equally given knowledge of the nature of the external thread of the bolt 13 it is possible to calculate the length of the bolt 13 which must be engaged with the collar 27 to accommodate the load necessary to achieve the desired tension. As mentioned above, generally this length will be at least equal to the bolt diameter. The use of an internally threaded bore 15 in the bolt in addition to the external thread permits some of the load necessary to achieve the desired tension in the bolt, to be accepted by the internal thread. The depth and/or diameter of the internal thread needed can thus be calculated with the aim of supporting the balance of the tensioning load which the external thread is unable to support owing to the reduced length of bolt 13 protruding from the nut 14 for engagement with the collar 27. However desirably the bore 15 in the bolt 13 will not extend significantly into the length of bolt within the nut 14. For preference the arrangement of Figure 1 where there is no penetration within the nut, or the arrangement of Figure 4 where there is negligible penetration will be used. However the arrangement of Figures 2 and 3 is acceptable, there being a degree of penetration insufficient to weaken the area of bolt 13 at which maximum stress concentration occurs during tensioning.

Figures 2 and 3 illustrate an alternative tensioner construction for achieving the same objectives as the Figure 1 construction but with an apparatus of smaller diameter. A bolt 17 similar to the bolt 17 of Figure 1 is utilized to engage the internal thread of the bolt 13. The thread extender 36 differs from the thread extender 16 of Figure 1 in that it fulfils part of the role of the collar 27 of Figure 1. Thus the thread extender 36 has an enlarged, hollow, internally threaded region 36a in screw-threaded engagement with the bolt 13, and axially spaced therefrom but integral therewith, a smaller diameter region 36k which is externally threaded to receive the collar 37 through which the hydraulic tensioning load is applied. The bolt 17 extends through a plain bore of the extender 36 and the head of the bolt 17 bears against the axial end of the narrower diameter region 36b of the extender. It will be recognised therefore that although the structure is different, the mechanical principle is the same in that the tensioning load is applied both to the exterior and the interior threads of the bolt 13 to provide an effective, but not actual, increase in the protruding length of the bolt 13. As with the arrangement in Figure 1 the application of the loading to both external and internal threads of the bolt 13 provides an even distribution of the stresses in the bolt when tension is applied.

The Figure 3 arrangement differs from the Figure 2 arrangement solely in the shaping of the head of the bolt 17 and the corresponding shaping of the axial end of the extender 36. Figure 3 also depicts diagrammatically a bridge member 38 which fulfil the function of the member 18 in Figure 1.

Referring now to Figure 4 it can seen that the example of the invention illustrated therein has many components in common with the Figure 1 construction, and for convenience such components will be identified by the same reference numerals.

It can be seen in Figure 4 that the bolt 13 and nut 14 are encircled by a member 18 which will be provided with a window (not shown) equivalent to the window 19 of Figure 1. At one axial end the member 18 seats against the surface 11 of the flange 12 and the member 18 carries, at its opposite axial end, the cylinder ring 23 containing the channel 24 which in turn slidably houses the annular piston 25.

The internally screw-threaded collar 27 is in screw-threaded engagement with the thread on the protruding part of the bolt 13 and its flange 28 cooperates with the piston 25. The bolt 17 of the Figure 1 construction is replaced by a threaded stud 47 one axial end of which is in screw-threaded engagement with the bore 15 of the bolt 13 and which extends axially through the collar 27 to protrude from the face of the flange 28 remote from the surface 11. The protruding end of the stud 47 is provided with a hexagonal extension 47a or an equivalent formation, whereby a tool can be used to apply torque to the stud 47 to screw the stud 47 firmly into the bolt 13.

The stud 47 extends through the collar 27 with clearance, and in screw-threaded engagement with the protruding part of the stud 47 is a nut 48 the diameter of which is such that it overlies the axial end face of the flange 28 of the collar 27.

When assembling the tensioning apparatus to the bolt 13 the collar 27 is screwed as far as possible onto the bolt 13, the stud 47 is screwed as far as possible into the bolt 13, and the nut 48 is tightened to firmly engage the flange 28. Thereafter, when hydraulic pressure is applied to the channel 24 in the ring 23 the collar 27, flange 28, nut 48, and stud 47 act as a single unit engaged with both the exterior and the interior of the bolt 13, to apply the tensioning load thereto.

It will be recognised that where appropriate the components will be formed from high tensile steel to minimise the risk of distortion when accommodating the high hydraulic loadings which are employed. Moreover, it will be usual to provide an apparatus specifically designed to accommodate a particular bolt diameter and bolt protrusion. Thus the components will be arranged so that immediately before applying the tensioning load the whole of the protruding length of the external thread of the bolt can be engaged by the collar 27 or its equivalent, and simultaneously the whole of the interior thread of the bolt can be engaged by the bolt 17 or its equivalent (clearances shown in the drawings in this respect are exaggerated for clarity). It is to be understood however that if desired an axially adjustable arrangement could be provided, by for example, the use of packing rings in the construction of the member 18, to accommodate different bolt protrusion lengths. When designing the components to suit any particular application attention must be given the material and wall thickness of the collar 27 (or its equivalent component) to ensure the appropriate degree of stretch in the component to allow "transfer" of stress to the internal thread of the bolt 13.

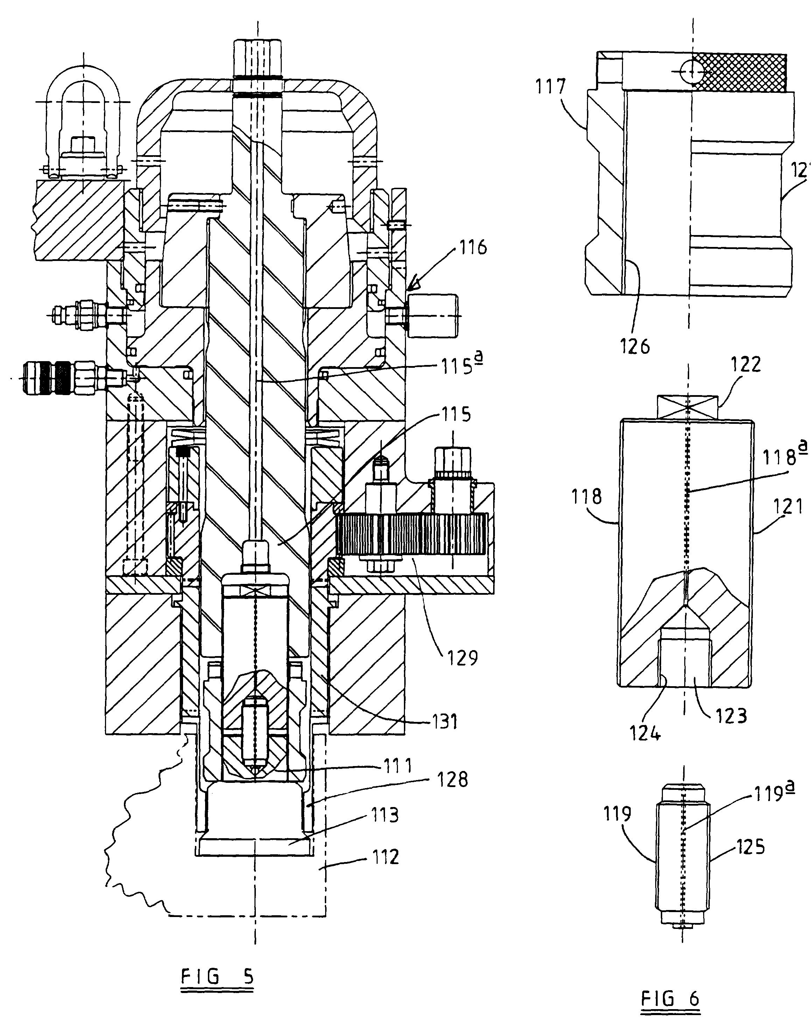

Referring now to Figures 5 to 9 of the drawings the bolt 111 to be tensioned protrudes upwardly through a flange or clamping disc 112 to be secured by the bolt. The outer end of the bolt 111 and a nut 113 in screw-threaded engagement therewith are received within a recess in the disc 112 so as to terminate flush with, or below, the upper surface of the disc 112. In use the nut 13 bears against the base of the recess in the disc 112 to maintain the tension in the bolt 111.

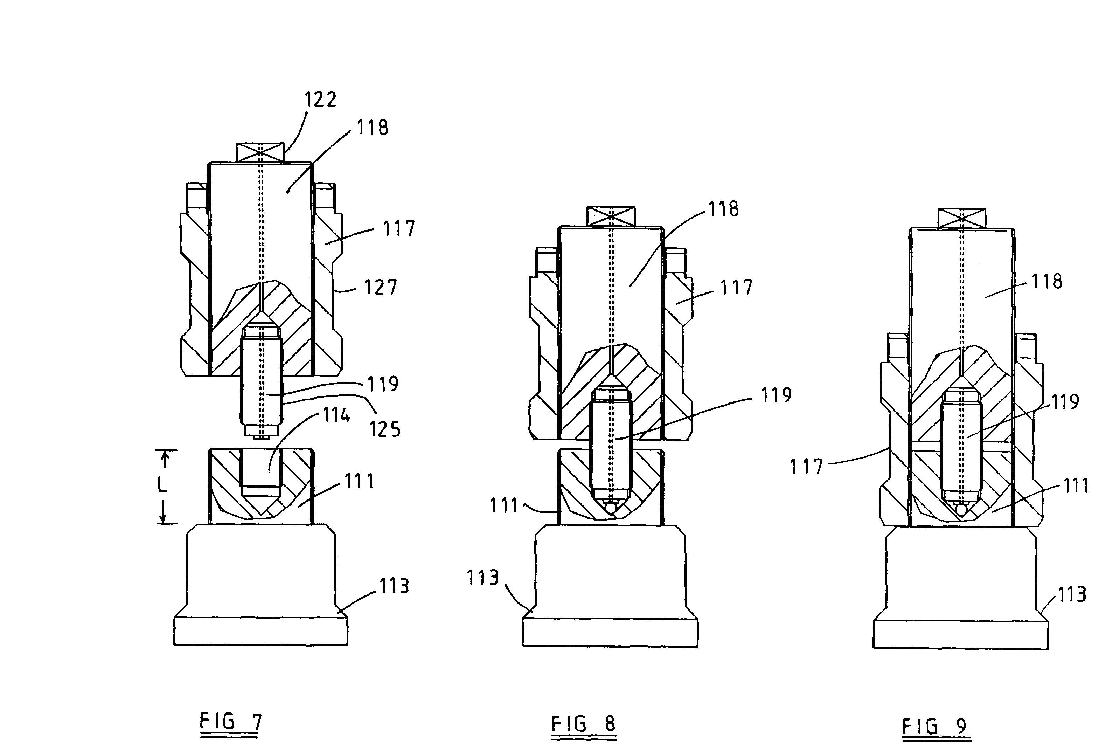

The length of externally screw-threaded bolt 111 protruding from the nut 113 is identified as "L" in Figure 7 and given the nature of the external thread, the diameter of the bolt, and the material from which the bolt is made, the length "L" is insufficient to permit the required tension to be developed in the bolt by way of a puller engaging simply the external thread. It can be seen therefore that the free end of the bolt is counterbored and the wall of the counter bore 114 is screw-threaded.

The hydraulic tensioning mechanism including an axially movable puller 115 and an hydraulic piston and cylinder arrangement 116 of known form for moving the puller 115 axially to apply tension, in use, to the bolt 111. At its lower end the puller 115 is formed with an axially extending bore which is internally screw-threaded, the diameter of the bore and the screw-thread therein corresponding to the diameter and thread of the bolt shank 111. In order to couple the puller 115 to the bolt shank 111 there is provided an assembly consisting of a coupling collar 117, a bolt adapter 118 and a coupling shank 119.

The adapter 118 is formed from a length of steel rod of diameter equal to that of the bolt 111 and formed externally with a screw-thread 121 of identical form to the screw-thread of the bolt 111. Moreover, ideally the adapter 118 is formed from the same material as that from which the bolt 111 is formed. One axial end of the adapter 118 is formed with a coaxial extension 122 of reduced diameter and having flats to permit it to be gripped by a tool such as a spanner. At its opposite axial end the adapter 118 is formed with a bore 123 which extends partway into the adapter 118 coaxial therewith, and having its wall formed with a screw-thread 124 identical to the screw-thread formed in the counter bore 114 of the bolt 111. The coupling shank 119 is formed from a length of steel rod having an external screw-thread 125 of diameter and form corresponding to that of the thread 124 in the bore 123 of the adapter 118 and the thread in the bore 114 of the bolt 111. The coupling collar 117 is also formed from steel, and has an internal screw-thread 126 corresponding to the screw-thread 121 of the adapter 118 and the external screw-thread of the bolt 111.

In use the coupling shank 119 is screwed into the bore 123 of the adapter 118 until the end of the shank 119 abuts the closed end of the bore 123. The coupling collar 117 is engaged on the external screw-thread 121 of the adapter 118 and this assembly of components 117, 118, 119 is introduced into the recess of the disc 112 and rotated to screw the region of the coupling shank 119 which protrudes from the adapter 118, into the bore 114 of the bolt 111. The length of the shank 119 is chosen in relation to the depths of the threaded bores 114 and 123, such that when the shank is fully received in both bores then the axial end of the adapter 118 is spaced from the axial end of the bolt 111 by a small clearance which can be seen in Figures 5, 8 and 9.

Thereafter the collar 117 is rotated relative to the adapter 118 and the bolt 111 to screw the collar 117 along the adapter 118 and into engagement with the external screw-thread of the bolt 111. The collar is screwed down until it abuts the upper surface of the nut 113 at which point approximately equal axial lengths of the collar 117 are engaged with the external thread of the bolt 111 and the external thread of the adapter 118 respectively.

Next the hydraulic tensioning apparatus is positioned to engage the disc 112, and the puller 115 is offered to the upwardly protruding portion of the adapter 118 and is screwed onto the adapter 118. It will be recognised that the length of the axial engagement of the adapter 118 within the puller 115 comfortably exceeds the minimum necessary to apply the desired tension to the bolt 111 without stripping the threaded connection of the puller 115 to the adapter 118.

Ideally the lower axial end of the puller 115 will abut, or at least terminate closely adjacent, the upper end of the collar 117. Hydraulic pressure will be applied to the piston and cylinder arrangement 116 to move the puller 115 axially and apply tension to the bolt 111, the tensioning force being applied to the bolt 111 through the adapter 118, the coupling collar 117, and the coupling shank 119. Thus the tensioning load is divided between the external and internal threads of the bolt 111 so permitting tensioning of the bolt notwithstanding the fact that the protruding length "L" of the bolt is insufficient to permit tensioning solely by way of the external thread.

The tensioning load applied to the adapter 118 by the puller 115 is transmitted initially by the collar 117 which is caused to stretch slightly, and in so doing to permit a part of the tensioning load to be applied by way of the shank 119. In order to control the distribution of loading between the external and internal threads of the bolt 111 the wall thickness of the collar 117 intermediate its ends will be chosen, given the parameters of the application in question, to afford a predetermined stretch, and therefore a predetermined load distribution between the external and internal threads of the bolt. As is apparent from the drawings the collar 117 illustrated has been formed with an external circumferential groove 127 to "tune" the stretch characteristic of the collar.

It will be recognised that in order for the collar 117 to be in simultaneous screw-threaded engagement with the adapter 118 and the bolt 111 the alignment of the thread of the bolt 111 with the thread 121 of the adapter 118 must be such that effectively one thread is a continuation of the other. It will be recognised that such positioning of the thread 121 as a continuation of the external thread of the bolt 111 may not occur automatically as the shank 119 is screwed into the thread of the bore 114, and in order to facilitate such adjustment the pitch of the thread on the adapter 119, and thus the thread in the bores 114, 123 is arranged to differ from the pitch of the thread on the exterior of the bolt 111 and the adapter 118 so that by rotating the adapter 118, together with the coupling shank 119 back from the position in which the shank 119 abuts the end of the bore 114, a rotational position can be reached at which the thread 121 on the adapter 118 is continuous with the external thread of the bolt 111 and the collar can be screwed along the adapter 118 and onto the bolt 111.

In one example the thread 121 of the adapter 118 and the external thread of the bolt 111 are 2 ³/₁₆" x 12 UNJ threads whereas the thread of the coupling shank 119 and the threads in the bores 14 and 23 are ⁷/₈" x 16 UNJ.

In a practical embodiment a plurality of bolts 111 are equiangularly spaced around the peripheral region of the disc 112 and it is the intention that they will be tensioned simultaneously by a multi-stud tensioning apparatus. The apparatus illustrated in Figure 5 is part of a multi-stud tensioning apparatus which includes a plurality of pullers 115 which are operated simultaneously by linked hydraulic piston and cylinder arrangements 116. Furthermore, each of the nuts 113 is intended to be automatically tightened and thus each nut is adapted to receive a respective axially extending drive socket 128 rotatable by a respective socket drive mechanism 129, the drive sockets 128 and associated drive sleeves 131 being positioned coaxially with the puller 115.

Ideally the adapter 118 and coupling shank 119 will be formed from the same material as the bolt 111 and the coupling collar 117 will be formed from a material chosen to achieve the desired elongation characteristics (and thus the "tuning") of the collar. It is to be understood however that it is not essential for the adapter and shank to be formed from bolt material and provided the material characteristics permit use in the chosen application other materials can be used.

It will be recognised that where the nut 113 and the protruding portion of the shank of the bolt 111 are to be received within the thickness of the disc 112 then the facility for reducing the protruding length of the shank of the bolt 111, while at the same time permitting tensioning, allows either the overall thickness of the disc to be reduced, or alternatively allows the thickness of the disc beneath the bolt 113 to be increased. Similarly, if desired the reduction in the necessary protruding length of the bolt can be used to achieve a corresponding reduction in the overall length of the bolt, thereby effecting a saving in material.

Each puller 115, adapter 118 and coupling shank 119 may, if desired, be formed with a respective axial bore, (indicated in the drawings by suffix a). The bores of each assembly being aligned to provide a passage extending from the upper free end of each puller 115 to the closed end of the bore 114 in the associated bolt 111. In use a small steel ball is disposed in the V-section machined relief at the end of the bore 114 and an elongate probe extends slidably through said passage and seats on said ball. The outer end of the probe moves in relation to a fixed datum as the bolt elongates during tensioning and can be thus be used as a visual indicator or measuring device for monitoring bolt elongation.

## Claims

1. An hydraulic tensioning apparatus characterized by comprising an internally screw-threaded collar (27; 36; 117) for screw-threaded engagement with that length of the bolt (13; 111) to be tensioned which protrudes from the associated nut (14; 113), an externally screw-threaded shank (17; 47; 119) for screw-threaded engagement in an internally screw-threaded bore in the protruding end region of the bolt, and the collar and the shank being movable by one component (25) of an hydraulic piston and cylinder arrangement, the other component (23) of which is fixed in use relative to the surface against which said nut seats.

2. An apparatus as claimed in Claim 1, characterized in that said shank (17; 47; 119) is mechanically coupled to said collar (27; 36; 117), and said collar is movable by said component such that said shank is movable by said component through the intermediary of said collar.

3. An apparatus as claimed in Claim 1 or Claim 2, characterized in that said shank secures an externally screw-threaded adapter (16; 118) to the end of said bolt and said collar is in screw-threaded engagement both with said adapter and with said bolt.

4. An apparatus as claimed in Claim 1, characterized in that said shank interconnects said bolt and an externally screw-threaded adapter (118) and said collar is in screw-threaded engagement with said adapter, said adapter being movable by said component to move said collar and said shank.

5. An apparatus as claimed in Claim 4, characterized in that said adapter protrudes from said collar for mechanical connection to said component.

6. An apparatus as claimed in Claim 4 or Claim 5, characterized in that said shank is in screw-threaded engagement in a bore in said adapter.

7. An apparatus as claimed in any one of the preceding claims, characterized in that said collar is shaped to control its stretch characteristics exhibited during tensioning, so as to control the distribution of loading between the exterior and interior threads of the bolt.

8. An apparatus as claimed in any one of Claims 1 to 3 and Claim 7, characterized in that said collar is movable by said component by way of a radially outwardly projecting peripheral flange (28) of said collar against which said component acts in use.

9. An apparatus as claimed in Claim 2, wherein said collar (36) is in screw-threaded engagement with said bolt, said shank is in screw-threaded engagement with said bolt and bears against said collar, and said collar is externally screw-threaded (36b) to provide a means of mechanical connection to said component.

10. A method of tensioning a bolt characterized by comprising the step of applying a stretching load to the bolt simultaneously through external and internal screw-threads of the bolt.
